# EUROPÄISCHE PATENTANMELDUNG

(11) **EP 2 666 613 A1**
(43) Veröffentlichungstag der Anmeldung: **27.11.2013**
(21) Anmeldenummer: 12169667.8
(22) Anmeldetag: 25.05.2012
(51) Int. Cl.: B29C 67/00

(54) **Erfindung betreffend Hilfsstrukturen für die Herstellung von Bauteilen mittels generativen oder additiven Verfahren**

(71) Anmelder: Technische Universität Darmstadt, 64283 Darmstadt (DE); Fraunhofer-Gesellschaft zur Förderung der angewandten Forschung e.V., 80686 München (DE)
(72) Erfinder: Abele, Eberhard, 77815 Bühl (DE); Fischer, Jakob, 65527 Engenhahn (DE); Stoffregen, Hanns, 60327 Frankfurt (DE); Rauschenbach, Matthias, 64289 Darmstadt (DE); Flaschenträger, David, 64293 Darmstadt (DE); Melz, Tobias, 64285 Darmstadt (DE)
(74) Vertreter: Stumpf, Peter

(57) **Zusammenfassung**

Die vorliegende Erfindung betrifft eine neuartige Hilfsstruktur, insbesondere Stützstruktur zur Vereinfachung der Herstellung von Bauteilen vermittels additiver oder generativen Verfahren, wie z.B. Laserschmelzen, Stereolithographie udgl. Es ist vorgesehen, die Hilfsstruktur, insbesondere Stützstruktur ebenso einem Vertreter dieser Verfahren, aber ggf. einem anderen Verfahren, als das Bauteil, herzustellen.

## Beschreibung

Die vorliegende Erfindung betrifft Hilfsstrukturen, insbesondere Stützstrukturen für die Herstellung von Bauteilen, etwa im Bereich Prototyping oder Manufacturing, welche mittels generativer oder additiver Verfahren bekannter Art, etwa durch schichtweisen Aufbau der Bauteile, herstellbar sind. Zu den hier umfassten Verfahren, gehören alle bekannten Verfahren, insbesondere die durch die VDI 3404 (Dez. 2009) erfassten Verfahren.

### Stand der Technik

Additive Fertigungsverfahren werden heutzutage sowohl im Bereich "Prototyping" als auch im "Manufacturing" eingesetzt. Kennzeichnend für diese Verfahren ist der schichtweise Aufbau von Bauteilen direkt aus 3D-CAD-Daten ohne werkstückspezifische Werkzeuge. Dabei ist wesentlich, dass eine Bauplattform existiert, auf die Bauteile in z-Richtung aufgebaut werden und die auch aus der Prozesskammer entnommen werden kann.

Generative Fertigungsverfahren ist eine übergreifende Beschreibung für solche Verfahren, welche auch als Rapid Prototyping-Verfahren bezeichnet werden und welche Verfahren zur schnellen und kostengünstigen Fertigung von Modellen, Mustern, Prototypen, Werkzeugen oder Endprodukten geeignet sind. Diese Form der Fertigungsverfahren erfolgt basiert auf computererzeugten Datenmodellen aus formlosen (Flüssigkeiten, Pulver u. ä.) oder formneutralen (band-, drahtförmig) Material mittels chemischer und/oder physikalischer Prozesse. Zu diesen Verfahren zählen -nicht abschließend:
Photolithographische Verfahren, Photopolymerisation durch schichtweises Aushärten aus einem Flüssigkeitsbad, schichtweises Auftragen und Verfestigen von Pulverschichten, schichtweises Austragen eines Bindemittels in einen Pulververbund, Energiestrahldepositionsverfahren in Metallpulver, Kunststoffextrudertechnik, wie bspw. Fused-Deposition-Modelling, kurz FDM und weitere oder synonym zu verstehende Verfahren, wie 3D Printing; Fused Deposition Modeling; Kaltgasspritzen; Laminated Object Modelling; Stereolithografie; selektives Laserschmelzen; selektives Lasersintern etc.

Verfahrensbedingt benötigt eine Vielzahl der additiven oder generativen Fertigungsverfahren (z.B. Strahlschmelzen, FDM, ...) Stützstrukturen, sogenannte Supports, zum Aufbau von Bauteilen. Diese Stützstrukturen sind unabdingbar und haben im Wesentlichen drei Funktionen:
Stützstrukturen gewähren die Anbindung des zu fertigenden Bauteils an die Bauplattform. Dies ist notwendig, da das Umgebungsmedium (Pulver, Flüssigkeit, ...) nicht die notwendige Stützfunktion erfüllt (z.B. können ohne Stützstrukturen keine Überhänge oder auch nicht die erste Bauteilschicht gefertigt werden. Ohne diese Stützfunktion ist ein Materialaufbau in z-Richtung nicht möglich. Da bei einigen Verfahren insbesondere in x-y-Ebene (d.h. in der Ebene der Bauplattform) erhöhte, thermisch induzierte Spannungen auftreten können, verhindern die Stützstrukturen das Ablösen des Bauteils von der Plattform während des Bauprozesses.
Stützstrukturen können genutzt werden, um gezielt Wärme aus dem Fertigungsbereich (z.B. beim Strahlschmelzen) abzuführen.
Um nach dem Fertigungsprozess Bauteil und Bauplattform beschädigungsfrei voneinander zu separieren, sind ebenfalls Stützstrukturen (Supports) notwendig.

Aus Anwendersicht ist insbesondere wichtig, dass Stützstrukturen die o.g. Funktionen erfüllen und sich einfach von Bauteilen (d.h. insbesondere möglichst auch ohne mechanische Nachbearbeitung oder ohne viele Einzelschritte in der Nachbearbeitung) und ohne Beschädigung der Bauteile entfernen lassen.

Im Stand der Technik gibt es für Stützstrukturen unterschiedliche Gestaltungslösungen. Häufig zeichnen sich die Stützstrukturen durch Stäbe oder Zähne an der Anbindung zum Bauteil aus. Insbesondere bei größeren Bauteilen ist die Entfernung der Stützstrukturen nur durch mechanische Nachbearbeitung mit Meißel, Säge, Zange etc. möglich und stellt einen erheblichen Nachteil bei additiven Fertigungsverfahren aufgrund von Zeit und damit Kosten dar. Darüber hinaus ist es oftmals nicht möglich, die Stützstrukturen ohne Beschädigung des Bauteils zu entfernen. Zusätzlich sind die Sollbruchstellen oftmals so ausgeformt, dass Reste an dem Bauteil verbleiben. Dies wirkt sich nachteilig auf die Maßhaltigkeit aus und erfordert eine zusätzliche mechanische Nachbearbeitung.

### Aufgabe

Es ist Aufgabe der Erfindung, die vorgenannten Nachteile im Stand der Technik zu beseitigen oder zumindest zu mindern.

### Lösung der Aufgabe

Diese Aufgabe wird gelöst durch eine Hilfsstruktur, insbesondere Stützstruktur mit den Merkmalen des Anspruchs 1 und durch ein Verfahren zur Herstellung einer solchen Hilfsstruktur mit den Merkmalen des Anspruchs 8 oder 9.

Vorteilhafte Ausführungsformen der Erfindung werden in der folgenden Beschreibung und in den Unteransprüchen offenbart.

Die erfindungsgemäßen Strukturen ermöglichen
die Entfernung der Strukturen ohne mechanische Nachbearbeitung, wie etwa durch nachträgliches Entfernen von Stegen oder Zähnen vom Bauteil,
schnelles und sicheres Entfernen ohne Beschädigung des Bauteils,
Entfernung der Struktur in einem kontinuierlichen, einstufigen Arbeitsprozess, im Falle des ununterbrochenen Abschälens der Struktur vom Bauteil, wodurch Zeit und damit Kosten gespart werden,
bei Einbringung in z-Richtung, als Stützstruktur zwischen zwei Bauteilelementen, die verbesserte Ausnutzung des Bauraumes (der Fertigungskammer) des additiven Fertigungsverfahrens,
das Herstellen auch von Bauteilen mit teilweisen oder umfänglichen Überhängen über - etwa in z-Richtung - darunter liegenden Bauteilen oder Bauteilelementen,
die Einsparung von Material, in der Ausführungsform als dünnwandige und insbesondere im Übergangsbereich zum Bauteil, dünnwandige Strukturen in Form einer Linie oder eines Splines und dadurch
die Verkürzung der Bau- oder Herstelldauer für mittels additiver oder generativer Herstellverfahren erzeugte Bauteile.

### Ausführungsbeispiele

Die Erfindung sieht zur Lösung der Aufgabe vor, mittels additiver oder generativer Verfahren herstellbare Hilfsstrukturen, insbesondere in Form von Stützstrukturen zur horizontalen oder/und vertikalen Stützung von Bauteilen so vorzusehen, dass im Übergangsbereich von der Struktur zum Bauteil leicht und weitestgehend rückstandslos vom Bauteil ablösbare Verbindungsbereiche oder Kontaktbereiche vorgesehen sind.

Als Hilfsstrukturen im Sinne der Erfindung dienen mittels additiver Herstellverfahren (Strahlschmelzen, Stereolithographie, ...) erzeugte, insbesondere dünnwandige Strukturen, und im Wesentlichen längliche, gestreckte Strukturen, welche insbesondere im Übergangsbereich zum Bauteil oder/und im Übergangsbereich zur Grundplatte, die Form einer Linie oder eines Splines aufweisen und ―bei der Variante zur reinen Stützung, d.h. in der Ausführungsform eines Verbindungs- und nicht lockeren Kontaktbereiches- in Form insbesondere einer Sollbruchstelle für mechanische, aber auch in Form einer Sollbruchstelle für andere Kräfte oder Energieeinwirkungen ausgeführt sind. Die Hilfsstrukturen sind so ausgeführt, dass der Sollbruchbereich im Wesentlichen an den äußeren Enden der im Wesentlichen länglichen, gestreckten Strukturen der (Stütz-)Struktur verläuft. Vorzugsweise sind auch die Hilfsstrukturen selber linien- oder splineförmig ausgeführt.

Unter Spline ist im Folgenden jeder Spline der folgenden Definition zu verstehen: Ein Spline n-ten Grades ist eine Funktion, die stückweise aus Polynomen höchstens n-ten Grades zusammengesetzt ist. Dabei werden an den Stellen, an denen zwei Polynomstücke zusammenstoßen (man spricht auch von Knoten), bestimmte Bedingungen gestellt, etwa dass der Spline (n-1)-mal stetig differenzierbar ist.

Handelt es sich bei dem Spline um eine stückweise lineare Funktion, so nennt man den Spline linear (es handelt sich dann um einen Polygonzug), analog gibt es quadratische, kubische usw. Splines.

Erfindungsgemäß ist die Hilfs- oder Stützstruktur ―in einer Ausführungsform- zumindest für einen Bauteilbereich kontinuierlich ausgeführt.

In einem weiteren Ausführungsbeispiel ist die Struktur so ausgeführt, dass das Abtrennen der Hilfsstruktur durch Schälen, vorzugsweise ohne Absetzen über die gesamte Länge des Übergangsbereiches zum Bauteil, vom Bauteil, ausgehend von einem Einstiegsbereich der Hilfsstruktur, etwa in Form von Anfang oder Ende einer gestreckten Hilfsstruktur, oder von einer Aussparung in der Mitte der Struktur oder in Form von sich aus der Ebene der Struktur erhebenden Angriffsflächen, wie Flügel, Laschen, Ösen, Haken, ausführbar ist.

In einem weiteren Ausführungsbeispiel ist die Struktur so ausgeführt, dass diese durch Einsatz eines Werkzeuges, wie Zange, Meißel, Spatel, Hobel, etc. an einer entsprechend ausgeführten Angriffsfläche oder einem Einstiegsbereich durch Abschälen vom Bauteil ablösbar ausgeführt ist.

In einem nicht graphisch dargestellten Ausführungsbeispiel ist die Hilfsstruktur zur hilfsweisen Halterung von Einbauteilen, wie z.B. Kanälen zum Anschluss an Kühl- oder Heizkreisläufe, elektronischen Kontaktierungen oder anderen in das Bauteil zu integrierenden Funktionselementen, geeignet ausgeführt.

Die obigen Ausführungsbeispiele können damit kombiniert werden, dass die Verbindungsbereiche im Folgenden Sinne anders, als die Stützstruktur selber gestaltet ist: Zum Beispiel in dem ein leichteres Abschälen des Verbindungsbereich dadurch gegeben ist, dass diese: Eine andere Porosität (bspw. nicht vollständig geschmolzenes Pulver), übersprungene Schichten (kennzeichnend für die additiven/generativen Fertigungsverfahren ― hierdurch ist auch eine geringere Festigkeit der Anbindung gegeben), andere Fertigungsparameter (Beim Lasersintern bspw. durch andere Laserparameter ― bspw. Strahlverschiebung, Fokusvariation, Geschwindigkeit, Leistung), durch eine andersartige Geometrie (bspw. Sollbruchstelle, z.B. in Form eines im Grenzbereich zum zu stützenden Bauteil verjüngt, etwa in Form eines Kreises oder eines Dreiecks etc. geformt ist, oder sich durch ein anderes Material auszeichnet, welches bei Abkühlung/Aufheizung oder durch Zusatz von Partikeln auszeichnet, welche bei Aussetzung des Verbindungsbereiches eines elektrischen oder/und magnetischen Feldes so reagiert, dass eine Schrumpfung mit Distanzbildung zum zu stützenden Bauteil auftritt.

Nachfolgend wird die Erfindung anhand von graphisch dargestellten Ausführungsbeispielen unter Bezug auf die Zeichnung näher erläutert. Weiter unten werden weitere Ausführungsbeispiele nur schriftlich dargestellt. Es zeigen zunächst:
Fig. 1: Eine 3-D Ansicht einer erfindungsgemäßen Stützstruktur mit einem gestützten Bauteil;
Fig. 2: Eine 3-D-Ansicht einer Stützstruktur mit mehreren ringförmigen Elementen und Einstiegsbereichen in Form von Angriffsflächen zum Abschälen der Stützelemente;
Fig. 3: Eine 3-D-Ansicht eines ringförmigen Bauteiles mit ringförmigen Stützstrukturen im unteren und oberen Bereich aus dem ein Quadrant zur Bildung einer Schnittzeichnung entfernt wurde;
Fig. 3b: Eine Vergrößerung des unteren Teils der Fig. 3

Im Folgenden werden die Figuren näher beschrieben.

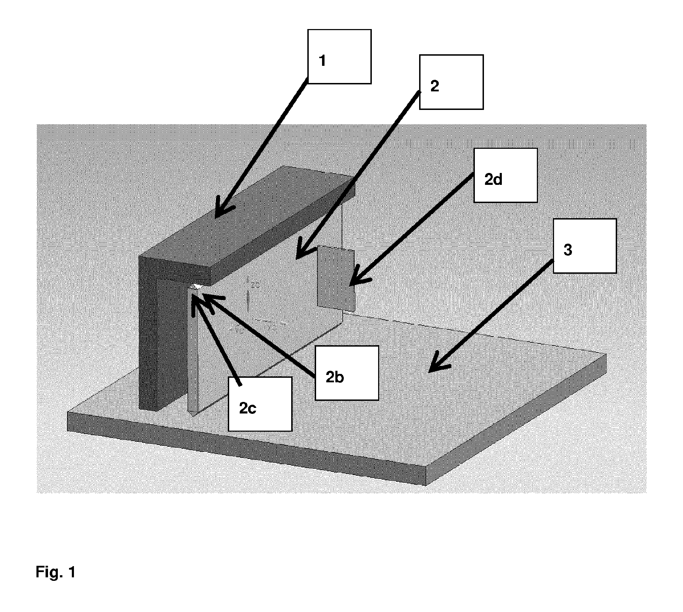

Fig. 1 verdeutlicht die vertikale Stützung eines L-förmigen Bauteiles (1) auf einer Grundplatte (3). Die Stützstruktur weist im unteren Bereich ―also zur Loslösung von der Grundplatte- und im oberen Bereich, also zur Loslösung von dem zu stützenden L-förmigen Bauteil einen Übergangsbereich (2b), welcher im Wesentlichen dreieckig und zum Kontaktbereich (2c) sich verjüngend ausgeführt ist. Der Übergangsbereich ist durchgehend über die gesamte Tiefe des Bauteils ausgeführt.

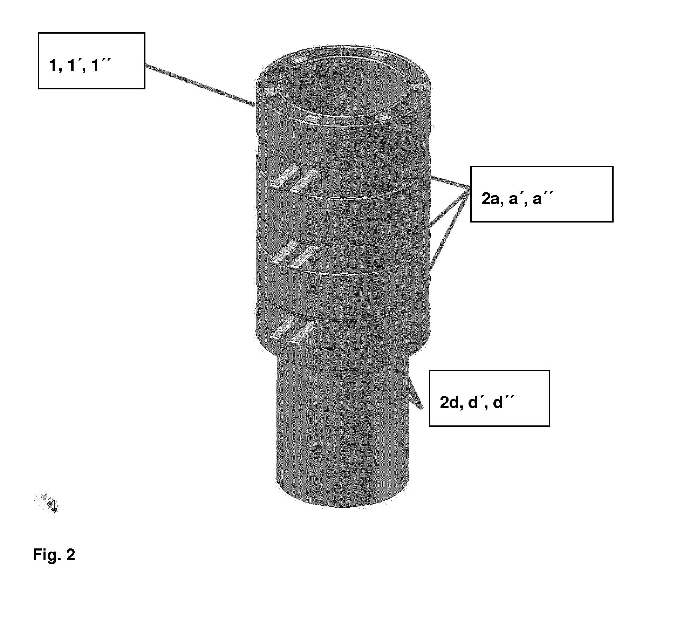

Fig. 2 zeigt ein komplexes ringförmiges Bauteil (1) mit mehreren ringförmigen Stützelementen (2a, 2a', 2a") auf, welche die darüber dargestellten überhängenden Bereiches des Bauteiles stützen. Ebenso dargestellt sind Angriffsflächen (2d, 2d', 2d") zum Angriff von Kräften zum Abschälen der Stützstrukturelemente (2a).

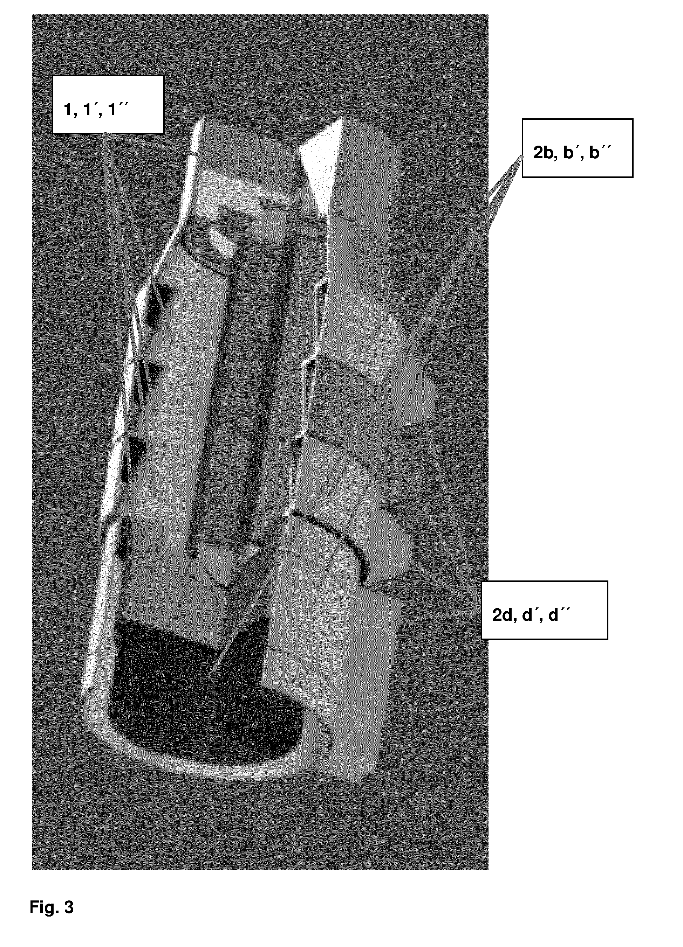

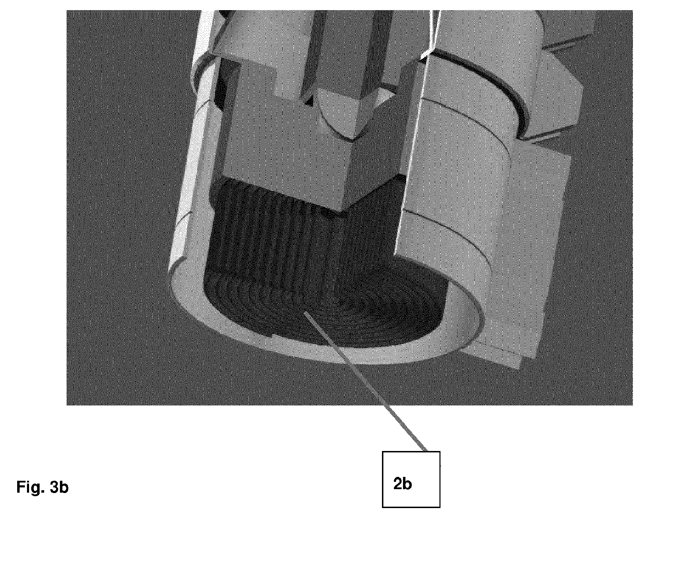

Fig. 3 zeigt ein noch komplexeres Bauteil mit 3 funktionell unterschiedlich wirkenden Stützstrukturen (2). Im unteren Bereich in Form einer Spirale zur Stützung des Bodens des Bauteiles. Ebenso im unteren Bereich in Form eines Ringes zur seitlichen Stützung der ersten Stützstruktur und des unteren Bereiches des Bauteiles. Im oberen Bereich zeigt Fig. 3 insgesamt 3 ringförmige Stützstrukturen, welche insbesondere dazu dienen die überhängenden, im Profil dreieckig ausgeführten Ringelemente zu stützen und zuvor überhaupt eine Grundlage für den Aufbau des nächsten, überstehenden Teils einer jeder nächsten der dreiecksförmigen Ringstrukturen zu ermöglichen.

In einem weiteren, nicht graphisch dargestellten Ausführungsbeispiel, ist vorgesehen, die Stützstruktur so zuerst zu fertigen, dass im nachfolgenden Prozess eines ebenfalls generativen Verfahrens die bekannten Parameter, etwa Temperatur odgl. oder zusätzliche Felder, wie elektromagnetische Felder so zumindest für gewisse Bereiche der Stützstruktur angelegt werden, so dass sich diese nach Erstarrung oder Stabilisierung aufgrund des Herstellverfahrens des entsprechend korrespondierenden Bereiches des Bauteiles, die entsprechende Schicht der Stützstruktur auflöst.

In einem weiteren, nicht graphisch dargestellten Ausführungsbeispiel ist vorgesehen, die Stützstruktur entlang ihrer Erstreckung, etwa um das seitlich oder von unten zu unterstützende Bauteil nicht gleichmäßig bezüglich Materialwahl oder Herstellungsparametern oder Geometrie zu gestalten, sondern etwa in der Nähe der Angriffsflächen zum Angriff zur Ablösung der Stützstruktur, d.h. mindestens im direkten Übergangsbereich zum zu stützenden Bauteil, z.B. mit weicherer oder weniger zäher Konsistenz, im Vergleich zu den weiter von der Angriffsfläche entfernten Bereichen, vorzusehen, als in Bereichen weit entfernt von den Angriffsflächen, auszuführen.

Dies kann z.B. aber auch durch Wahl eines anderen Materials oder durch Variation der Herstellungsparameter bei der Herstellung der Stützstruktur erfolgen. Dies kann aber auch durch Wahl einer dünneren oder keilförmig zulaufenden oder trapezartigen oder anderen Geometrie vorgesehen werden. Die oben genannten 3 Arten von Variationen können einzeln, oder auch in Kombination von 2 oder 3 der genannten Varianten natürlich auch in der Nähe des oder im Kontaktbereich und nicht nur in der Nähe der Angriffsflächen vorgesehen sein.

Durch diese Maßnahme wird das Einreißen des oder der Verbindungsbereiche in der Nähe der Angriffsfläche, bei meist noch im Wesentlichen senkrechter Krafteinwirkung in Relation zur Stützstrukturoberfläche, erleichtert. Im späteren Verlauf des Abschälens der Stützstruktur oder zumindest des Übergangsbereiches dieser zum zu stützenden Bauteiles, d.h. im späteren Verlauf der Rißbildung entlang des oder der Verbindungsbereiche kann dann eine höhere Kraft aufgewendet werden. In diesen entfernter von der Angriffsfläche liegenden Bereichen ist eine zähere Ausführung der Verbindungsbereiche für den Abschälvorgang unschädlich, aber für die Stützfunktion der Stützstruktur eventuell erforderlich. Dies insbesondere auch in Bereichen, wo zwar die Stützstruktur durchgehend, aber das zu stützende Bauteil nicht durchgehend an der Stützstruktur anliegend ausgeführt ist.

In einem weiteren, nicht dargestellten, Ausführungsbeispiel ist vorgesehen, lediglich einen sich über die ganze Länge der Stützstruktur durchgehend erstreckenden Bereich vorzusehen und nur an den notwendigen Stellen, von diesem Erstreckungsbereich seitlich zum Bauteil hinführend (also quer zur Erstreckungsrichtung), einen Struktur-Verbindungs- und Übergangsbereich mit Kontaktbereich vorzusehen. Dieser Erstreckungsbereich kann z.B. die Form eines Fadens oder hohlen oder massiven Kabels oder Seiles haben, an welches in zur Stützung notwendigen Bereichen, Verbindungs- und Übergangsbereiche mit Kontaktbereichen bis hin zum Bauteil vorgesehen sind. Der Erstreckungsbereich kann aber auch die Form eines Rechtecks aufweisen, von welchem Verbindungsbereiche entlang der Erstreckung in Teilbereichen sich zum Bauteil hin erstrecken und/oder sich nur in manchen Teilbereichen auch noch Kontaktbereiche zum Bauteil aufweisen. Entweder weil das Bauteil keine durchgehend bis an die Teilbereiche heranreichende Ausdehnung aufweist, oder weil auf Kontaktbereiche ―zur Ersparnis von Material und Zeitaufwand bei der Herstellungverzichtet worden ist.

In einem weiteren, nicht dargestellten, besonders vorteilhaften Ausführungsbeispiel, ist vorgesehen, in den Verbindungsbereichen entsprechende Partikel, z.B. magnetische Partikel vorzusehen, welche in einer solchen Konzentration vorliegen, dass diese durch einen über diesen Verbindungsbereich geführten Magneten, und damit die Verbindungsbereiche im Vergleich zu den Segmenten, so stark angezogen werden, dass die Bereiche aufreißen und der Schälvorgang ohne mechanischen Angriff erfolgen kann. Selbstverständlich sind auch andere Verbindungen von Partikeln und elektromagnetischen Feldeingriffen vorstellbar. Etwa durch Spulen odgl..

In einem weiteren, nicht dargestellten, vorteilhaften Ausführungsbeispiel, ist vorgesehen, dass die Stützstruktur aus mehreren Schichten aufgebaut ausgeführt ist. Vorzugsweise wird dann an dem Kontaktbereich ein Trennmittel zum leichteren Ablösen der Stützstruktur-Segmente vom Bauteil vorgesehen.

Ein besonders vorteilhaftes Verfahren zur Herstellung der Stützstruktur ist dadurch gegeben, wenn beim Schritt der Berechnung der Positionierung und des Verlaufes und der jeweiligen Breite der Stützstruktur oder des Erstreckungsbereiche der Stützstruktur, insbesondere für den Bereich der Verbindungsbereiche, auch berücksichtigt wird, in welcher Richtung später beim Schälen Druck/Kraft auf die Stützstruktur und insbesondere auf den Verbindungsbereich ausgeübt wird und dabei berücksichtigt wird, welcher Verlauf günstiger ist, um einen Bruch des Verbindungsbereiches beim Schälen zu erzeugen. D.h. die Information aus dem Computermodell weiter durch "Bruchkraftlinien" angereichert werden und nachfolgend, diese Informationen genutzt werden, um die Verbindungsbereiche passend im Sinne einer einfachen Ablösung, etwa durch Abschälung, zu erzeugen. Ebenso kann dieses Verfahren, d.h. des Einsatzes des Computermodells zur Planung der Stützstruktur genutzt werden, um die Einwirkung von Temperaturänderungen oder/und die Einwirkung von elektro- oder/und magnetischen Feldern zum Zwecke der Lösung der Stützstruktur vom Bauteil, zu optimieren.

In einer ganz besonders vorteilhaften Variation der Herstellung der Stützstruktur in der hier beschriebenen Phase der Planung oder Auslegung, kann vorgesehen sein, dass auch die Stützleistung berechnet wird und in die Auslegung der Stützstruktur im Übergangs- oder Kontaktbereich einfließt. Durch geeignete Variation der Materialwahl oder Geometrie oder der Herstellparameter in diesen Bereichen kann so vorgesehen werden, dass die genannten Bereiche zum einen optimal ―etwa auf Druck, d.h. im Sinne der Stützung- reagieren, aber andererseits auch optimal auf tangentialen oder/und vertikalen Zug oder entsprechende Richtungskomponenten des zur Abschälung eingesetzten Zuges, also im Sinne einer leichten Abschälbarkeit, reagieren.

Es versteht sich, dass die Hilfs-, oder Stützstruktur nicht notwendigerweise mit dem gleichen Verfahren und auch nicht mit dem gleichen Verfahren aber anderen Produktionsparametern hergestellt werden muss.

Die in der vorstehenden Beschreibung, in den Figuren sowie in den Ansprüchen offenbarten Merkmale der Erfindung können sowohl einzeln als auch in vielen Kombinationen für die Verwirklichung der Erfindung in ihren verschiedenen Ausführungsformen wesentlich sein.

### Bezugszeichenliste

- 1: Bauteil
- 2: Hilfs- oder Stützstruktur
- 2a: Struktur-Element
- 2b: Struktur-Übergangs- oder -Verbindungsbereich
- 2c: Struktur-Kontaktbereich
- 2d: Struktur-Angriffsfläche oder -Einstiegsbereich
- 3: Grund- oder Basisplatte

## Patentansprüche

1. Hilfsstruktur hergestellt nach einem oder einem kombinierten der bekannten Verfahren der additiven oder generativen Herstellverfahren, geeignet zur Unterstützung, insbesondere zur horizontalen oder/und vertikalen Stützung eines Bauteiles während dessen Herstellung durch eines der bekannten additiven oder generativen Herstellverfahren, **dadurch gekennzeichnet, dass** die Struktur (2) im Übergangsbereich (2b) zum herzustellenden Bauteil (1), zumindest an den zur Stützung notwendigen Stellen, einen Kontaktbereich (2c) aufweist, wobei die Stützstruktur, geeignet zur Ablösung in einem Zug, zumindest in einem Erstreckungsbereich quer zu ihrer Erstreckung durchgehend ausgeführt ist.

2. Struktur nach Anspruch 1, **dadurch gekennzeichnet, dass** der Kontaktbereich (2c) linienförmig oder splineförmig an der Hilfsstruktur, geeignet zur Stützung des Bauteils, ausgeführt ist.

3. Struktur nach einem der Ansprüche 1 bis 2, **dadurch gekennzeichnet, dass** der Kontaktbereich (2c) aus einem anderen Material, als der anderen Elemente der Struktur, oder dem gleichen Material, aber geringerer Dicke oder Stärke als die anderen Elemente der Struktur (2) gefertigt ist oder im Übergangsbereich (2b) zum Bauteil mit einer sich verjüngenden Dicke oder mit höherer Porösität oder mit sogenannten "übersprungener oder übersprungenen Schichten" oder in einer anderen Geometrie, etwa zur Erzeugung einer Kerbwirkung, oder mit anderen Fertigungs- oder Verfahrensparametern oder einem anderen Herstellverfahren hergestellt, ausgeführt ist.

4. Struktur nach einem der Ansprüche 1 bis 3, **dadurch gekennzeichnet, dass** das andere Material zumindest im Kontaktbereich (2c) Komponenten umfasst, wie etwa Wasser, oder magnetische Partikel oder Anteile von ringförmigen elektrischen Leitern, welche durch Einwirkung von Wärme, von Kälte, von Mikrowellen, anderer elektrischer oder und magnetischer Felder ein schmelzen oder ein verdampfen oder sublimieren oder anderweitige, zumindest teilweise Auflösung oder Schrumpfung des Kontaktbereiches, insbesondere mit Erhöhung des Abstandes von Kontaktbereich (2c) zum Bauteil (1) bewirken.

5. Struktur nach einem der Ansprüche 1 bis 4, **dadurch gekennzeichnet, dass** der Kontaktbereich (2c) als Verbindungsbereich (2b), d.h. mit materieller Verbindung von Stützstruktur (2) zu Bauteil (1) ausgeführt ist.

6. Struktur nach einem der Ansprüche 1 bis 5, **dadurch gekennzeichnet, dass** der Verbindungsbereich (2b) so ausgeführt ist, dass der Verbindungs- und/oder Kontaktbereich durch Schälen vom Bauteil lösbar, ausgeführt ist, d.h. mit materieller Verbindung von Stützstruktur (2) zu Bauteil (1) ausgeführt ist.

7. Struktur nach einem der Ansprüche 1 bis 6, **dadurch gekennzeichnet, dass** die Struktur Angriffs-, Eingriffs oder andere Elemente (2d) aufweist, welche ein Angreifen, Ansetzen, Einsetzen oder Anlegen von Krafteinwirkung so erlauben, dass der Verbindungsbereich oder/und Kontaktbereich durch Schälen, im Wesentlichen ohne Unterbrechung, erfolgen kann.

8. Verfahren zur Entfernung einer Hilfs- oder/und Stützstruktur nach einem der Ansprüche 1 bis 7, **gekennzeichnet durch** die folgenden prinzipiellen Schritte:
a) Ansetzen einer Kraft an einem Angriffsbereich am oberen oder/und unteren Ende oder einem anderen dafür vorgesehenen Angriffselement (2d) eines Elementes (2a) der Stützstruktur (2)
b) Einwirkung der Kraft an dem der oder den im Ansatz befindlichen Angriffsfläche oder -flächen, im Wesentlichen mit mindestens einer Kraftkomponente in Richtung der Normalen zur Oberfläche des Bauteils (1) oder der parallel verlaufenden Oberfläche des Bauteils oder senkrecht zur Verlaufsrichtung der gestreckten Hilfsstruktur, in dem Oberflächenbereich, welcher **durch** die Krafteinwirkung gerade von dem Bauteil gelöst,
c) Fortgesetzte Einwirkung der Kraft bis das Segment ausreichend zur Loslösung des Bauteils abgeschält ist,
d) Im Falle von mehreren Segmenten des Bauteiles (1), Wiederholung der Schritte a) bis c) bis zur vollständigen Abschälung aller Segmente vom Bauteil.

9. Verfahren zur Entfernung einer Hilfs- oder/und Stützstruktur nach einem der Ansprüche 1 bis 7, **gekennzeichnet dadurch, dass** zur Ablösung der Stützstruktur elektrische, oder/und magnetische Felder oder/und Ultraschallfelder oder/und die Einwirkung von Hitze oder/und Kälte eingesetzt wird, um ein Schrumpfen des Verbindungsbereiches (2b) oder/und ein Schmelzen oder eine Sublimation oder anderweitige Auflösung zumindest des Verbindungsbereiches oder/und des Kontaktbereiches (2c) zu erzeugen, so dass dieser den Kontakt zum Bauteil (1) verliert.

10. Verfahren zur Herstellung einer Stützstruktur nach einem der Ansprüche 1 bis 7, **dadurch gekennzeichnet, dass** bei der Auslegung der Stützstruktur oder bei der Herstellung der Stützstruktur durch Wahl der entsprechenden Verfahrensparameter, die zu erwartenden Kräfte durch Zug oder/und Druck oder/und Temperaturveränderungen während der Herstellung des Bauteiles oder/und beim Loslösen der Stützstruktur vom Bauteil, berücksichtigt werden, um iterativ die Form der Struktur oder nur ausgehend von einer von der schrittweise berechneten Form der Struktur unabhängigen Weise die 3dimensionale oder mindestens 2dimensionale Form der Struktur oder deren Materialzusammensetzung zu berechnen.

11. Verfahren zum Herstellen von Bauteilen gemäß den bekannten generischen Herstellverfahren, **gekennzeichnet durch** Verwendung eines der Verfahren gemäß Anspruch 8 oder/und 9 oder/und 10 oder/und Einsatz einer Stützstruktur nach einem der Ansprüche 1 bis 7.

12. Verwendung eines der Verfahren nach Anspruch 8 bis 11 zur Herstellung von Bauteilen gemäß den bekannten generischen Herstellverfahren.
